# EUROPÄISCHE PATENTSCHRIFT

(11) **EP 3 004 712 B1**
(45) Veröffentlichungstag und Bekanntmachung des Hinweises auf die Patenterteilung: **11.07.2018**
(21) Anmeldenummer: 14725610.1
(22) Anmeldetag: 02.05.2014
(51) Int. Cl.: F16L 55/163, F16J 15/08

(54) **DICHTUNGSINNENMANSCHETTE MIT VERFORMBAREN ZWISCHENABSCHNITT**
SEALING INNER SLEEVE HAVING A DEFORMABLE INTERMEDIATE SECTION
GARNITURE INTÉRIEURE CYLINDRIQUE À PARTIE INTERMÉDIAIRE DÉFORMABLE

(30) Priorität: 04.06.2013 DE 102013210365
(43) Veröffentlichungstag der Anmeldung: 13.04.2016
(73) Patentinhaber: GRAF Patentverwertungs GbR, 78073 Bad Dürrheim (DE)
(72) Erfinder: GRAF, Jürgen, 78073 Bad Dürrheim (DE); GRAF, Joachim, 78073 Bad Dürrheim (DE)
(74) Vertreter: Westphal, Mussgnug & Partner Patentanwälte mbB
(86) Internationale Anmeldenummer: PCT/DE2014/100155
(87) Internationale Veröffentlichungsnummer: WO 2014/194886

(56) Entgegenhaltungen:
- EP-A1- 0 795 714
- DE-A1- 10 017 711
- DE-A1-102010 015 483
- DE-U1- 29 604 954

## Beschreibung

Die Erfindung betrifft eine Dichtungsinnenmanschette zum Einsetzen in Rohre, um dortige Leckstellen abzudichten, gemäß den Merkmalen des Oberbegriffs des Anspruchs 1.

Dichtungsinnenmanschetten sind hinlänglich bekannt und beispielsweise in DE 44 01 318 C2 beschrieben. Mit Hilfe von solchen Dichtungsinnenmanschetten können Undichtigkeitsstellen von z. B. unterirdisch verlegten Rohren aus Beton oder einem anderen Werkstoff ohne Grabarbeiten repariert werden. Hierfür wird in das zu reparierende, undichte Rohr die Dichtungsinnenmanschette bis zur Stelle der Undichtigkeit eingebracht. Dabei ist zunächst die Dichtungsinnenmanschette spiralig zusammengebogen, so dass sie einen kleineren Durchmesser als das abzudichtende Rohr hat. Ist die Dichtungsinnenmanschette bis zu der undichten Stelle des zu reparierenden Rohres verbracht, wird mittels einer mechanischen Montiereinrichtung die Dichtungsinnenmanschette so lange aufgeweitet, bis sie sich unter Zusammenpressen der Dichtungsringe sehr eng an die Rohrinnenwand angelegt haben. Mittels einer Verriegelungsvorrichtung, die ein mit einer Zahnreihe kämmendes Spannritzel und einen in dessen Zähne eingreifenden, federnden Sperrriegel aufweist, wird die Dichtungsinnenmanschette in ihrer aufgeweiteten Stellung gehalten.

Eine hierzu verbesserte Verriegelungsvorrichtung schlägt die EP 0 805 932 B1 vor. Dort ist eine Dichtungsinnenmanschette offenbart mit einer Verriegelungsvorrichtung, die sehr kleine Rastschritte gestattet und damit nach erfolgter Aufweitung ein festes, dauerhaftes Anliegen an der Rohrinnenwand bei hoher Presswirkung auf die Dichtorgane gewährleistet. Die verbesserte Verriegelungsvorrichtung verfügt hierfür über einen am innenliegenden Bandende in Umfangsrichtung angeordneten Schlitz, an dessen beiden gegenüberliegenden Längskanten jeweils eine Zahnreihe angeordnet ist. In dem Schlitz sind zwei Spannritzel vorgesehen, von denen jedes mit einer der beiden Zahnreihen kämmt und zugleich von einem gemeinsamen Sperrritzel als Rastorgan beaufschlagt werden. Über eine Spannfeder wird das Sperrritzel in den Zwischenraum zwischen die beiden Spannritzel gedrückt.

Diese Dichtungsinnenmanschetten sind bestens dafür geeignet, in geraden Kanalrohren eingesetzt zu werden, um beispielsweise dort Wandungsrisse abzudichten. Hierfür werden die Dichtungsinnenmaschetten an ihrem Außenumfang mit einem Dichtmittel, insbesondere einen elastischen Überzug, wie zum Beispiel einen Gummischlauch, der eine oder mehrere umlaufende Dichtlippen aufweisen kann, versehen und dann mit einem sogenannten Packer an die schadhafte Stelle des zu reparierenden Kanalrohres eingefahren. Der Packer mit der Dichtungsinnenmaschette wird in Position gebracht und dann mittels einer mitgeschleppten Luftleitung aufgeblasen, wobei sich die Dichtungsinnenmanschette aufweiten kann bis sie an dem zu sanierenden Rohrstück dichtend anliegt. Die Verriegelungseinrichtung sorgt dafür, dass die Dichtungsinnenmanschette diese Position beihält, auch wenn der Packer wieder entfernt wird.

In der Praxis treten aber häufig Kanalschäden auf, bei denen zwei benachbarte Rohrstücke einen Radialversatz aufweisen. Dies kann insbesondere durch einen Rohrmuffenversatz bedingt sein. Zudem können bei den Kanalrohren auch Rohre unterschiedlichen Durchmessers aufeinander treffen. Schäden bei solchen Rohren mit Radialversatz oder unterschiedlichen Durchmessern sind mit den oben beschriebenen Dichtungsinnenmanschetten nicht reparierbar, da die Dichtungsinnenmanschetten im verrassteten und außenseitig abgestützten Zustand einen hohen Verformungswiderstand ähnlich demjenigen eines umfangmäßigen abgeschlossenen Rohres aufweisen und sich somit nicht verformen lassen.

Dieses Problem kann mit einer Dichtungsinnenmanschette gelöst werden, wie diese in der EP 0 795 714 A1 beschrieben ist. Diese Dichtungsinnenmanschette zeichnet sich durch einen zwischen zwei Endabschnitten der Dichtungsinnenmaschette befindlichen Zwischenabschnitt aus, der der Dichtungsinnenmanschette beim Biegen um ihre Längsachse einen geringeren Verformungswiderstand entgegensetzt als die Endabschnitte der Dichtungsinnenmanschette. Die Herabsetzung des Verformungswiderstandes wird dort durch Materialschwächung und/oder faltbalkartige Ausbildung ermöglicht. Als Materialschwächung wird unter anderem eine Loch- oder Schlitzstanzung der Dichtungsinnenmanschette im Zwischenabschnitt vorgeschlagen. Die Vielzahl von dabei in Umfangsrichtung im Zwischenabschnitt der Dichtungsinnenmaschette verteilten Schlitze sind im Ruhezustand der Dichtungsinnenmanschette, also im noch undefomierten Zustand der Dichtungsinnenmanschette zueinander achsparallel zur Mittenachse der Dichtungsinnenmanschette angeordnet.

In der DE102010015483 A1 wird ebenfalls eine Dichtungsinnenmanschette gezeigt die zum internen Reparieren von Rohren und Leitungen, wie Abwasserleitungen, Druckwasserleitungen, Wasserquellen und Erdgasleitungen geeignet ist. Die Leitungsreparatureinrichtung weist eine Hülse mit einem Haltemechanismus auf, um die Hülse in einer rohrförmigen Konfiguration zu halten. Die Hülse ist aus einem Metall oder einem Hartplastikblech hergestellt, das Perforationen aufweist. Einige der Perforationen sind wie längliche Schlitze und Streifen ausgeformt. Hier setzt die vorliegende Erfindung an. Die Erfindung hat das Ziel diese bekannte Dichtungsinnenmanschette so weiter zu entwickeln, dass einerseits eine gute Verformbarkeit der Dichtungsinnenmanschette im Zwischenabschnitt gewährleistet ist, aber weiterhin eine ausreichende Stabilität der Dichtungsinnenmanschette beim Einsatz in zu sanierenden Rohren mit Radialversatz bzw. mit Durchmesseränderung sichergestellt bleibt. Insbesondere soll es mit der Dichtungsinnenmanschette auch möglich sein Rohre zu sanieren, die leicht schräg zueinander liegen.

Dieses Ziel wird durch eine Dichtungsinnenmanschette mit den Merkmalen des Anspruchs 1 gelöst.

Weiterbildungen der Dichtungsinnenmanschette sind in den Unteransprüchen angegeben.

Die Erfindung beruht im Wesentlichen darauf, eine Vielzahl von Längsschlitzen am Außenumfang der Dichtungsinnenmanschette anzuordnen, welche in Bezug zur Mittenachse der Dichtungsinnenmanschette hin einen Winkelversatz aufweisen. Dies bedeutet, dass die Vielzahl von Längsschlitzen schräg zur Mittenachse der Dichtungsinnenmanschette ausgerichtet sind.

Versuche haben gezeigt, dass eine Vielzahl von Längsschlitzen am Umfang der Dichtungsinnenmanschette in einem Bereich von etwa gößer 45° und kleiner 90° zur Mittenachse X der Dichtungsinnenmanschette verteilt sein müssen, wenn die Dichtungsinnenmanschette auch bei Leckstellen an zueinander leicht schräg liegenden Rohren eingesetzt werden soll. Ein Schrägstellen von etwa größer 45° und kleiner 90° dieser Längsschlitze ist gleichbedeutend damit, dass die Längsschlitze in einem Winkel von kleiner 45° und größer 0° zu einer Lotsenkrechten der Mittenachse der Dichtungsinnenmanschette angeordnet sind.

In einer bevorzugten Ausführungsform der Längsschlitze sind diese vorzugsweise zwischen 55° und 85° und weiterhin vorzugsweise in einem Winkel von etwa 75° zur Mittenachse X der Dichtungsinnenmanschette platziert.

In einer Ausführungsform der Erfindung können Längsschlitze etwa 3 bis 7 mm breit und etwa 10 bis 15 cm lang und von Längsstegen begrenzt sein, welche etwa 1 bis 5 mm breit sind. Eine derartige Anordnung von Längsschlitzen ist für die Abdichtung von Leckstellen von schräg zueinander liegenden Rohren bestens geeignet.

Die abzudichtenden Rohre bestehen in der Regel aus einer Vielzahl von aneinanderliegenden Rohrabschnitten. Dabei tritt es häufig auf, dass einzelne Rohrabschnitte nicht exakt zueinander achsgleich ausgerichtet sind. Neben einer leichten Schrägstellung von aneinanderliegenden Rohren, die mit den erwähnten Längsschlitzen beim Auftreten von Leckstellen abgedichtet werden können, gibt es auch solche Konstellationen, bei denen die aneinanderliegenden Rohrabschnitte axial zueinander versetzt sind, also einen Radialversatz aufweisen oder einen unterschiedlichen Durchmesser haben. Um auch solche Rohre wirksam abdichten zu können, sieht die Erfindung neben der erwähnten Gruppe von Längsschlitzen eine weitere Gruppe von Längsschlitzen vor, die zur Mittenachse der Dichtungsinnenmanschette weniger schräg gestellt sind. Versuche haben dabei ergeben, dass der Winkelversatz bei dieser Gruppe von Längsschlitzen idealerweise zwischen etwa 5 Grad und 20 Grad und vorzugsweise etwa 10 Grad betragen sollte. Bei einem derartigen Winkelversatz der Längsschlitze zur Mittenachse der Dichtungsinnenmanschette ist sowohl eine gute Verformbarkeit der Dichtungsinnenmanschette möglich als auch eine hohe Stabilität gewährleistet, selbst dann, wenn die Dichtungsinnenmanschette in Kanalrohren mit Radialversatz bzw. unterschiedlichen Durchmessern eingesetzt wird.

Im Nachfolgenden wird die Gruppe von Längsschlitzen mit dem geringeren Winkelversatz, also die Längsschlitze, die dazu vorgesehen sind, Kanalrohre mit Radialversatz bwz. Unterschiedlichen Durchmessern zu sanieren, als erste Gruppe von Längsschlitzen bezeichnet, während die anderen Längsschlitze, die zur Mittenachse schräger gestellt sind als die erste Gruppe von Längsschlitzen als zweite Gruppe von Längsschlitzen bezeichnet werden.

Vorzugsweise sind sämtliche Längsschlitze in ihrer schrägen Anordnung gruppenweise parallel zueinander ausgerichtet. Dabei sind die einzelnen Längsschlitze durch Längsstege voneinander getrennt.

In einer Weiterbildung der Erfindung ist vorgesehen, dass die Längsschlitze der ersten Gruppe bezogen auf die Umfangsrichtung der Dichtungsinnenmanschette etwa ein bis fünf Mal breiter als die Längsstege ausgebildet sind.

Die Längsschlitze der ersten Gruppe können endseitig abgerundet oder eckig gestaltet sein. Dabei ist auch möglich oder in einer Weiterbildung losgelöst hiervon, dass die Längsstege in ihrer Mitte in Umfangsrichtung gesehen bauchig ausgebildet sind, also in ihrem Mittenbereich breiter sind als in ihren beiden Endbereich.

Es hat sich zudem als günstig erwiesen, den Zwischenabschnitt der Dichtungsinnenmanschette so zu bemessen, dass dieser etwa 0,2 bis 0,5 der Gesamtlänge der Dichtungsinnenmanschette entspricht. Vorzugsweise ist der Zwischenabschnitt der Dichtungsinnenmanschette mittig zu den beiden gleich lang gestalteten Endabschnitten platziert. Die beiden Endabschnitte der Dichtungsinnenmanschette können hierbei beispielsweise jeweils eine Länge von 0,25 bis 0,4 der Gesamtlänge der Dichtungsinnenmanschette aufweisen.

In einer Ausführungsform der Erfindung ist vorgesehen, dass die Dichtungsinnenmanschette in ihrem Zwischenabschnitt eine erste Gruppe von Längsschlitzen aufweist, wobei diese erste Gruppe von Längsschlitzen an ihren beiden Seiten von jeweils einer zweiten Gruppe von Längsschlitzen berandet sind. Die beiden zweiten Gruppen von Längsschlitzen können dabei ihre Längsschlitze parallel zu einander ausgerichtet haben oder an einer Seite der ersten Gruppe von Längsschlitzen in eine Richtung schräg gestellt und am anderen Ende der ersten Gruppe von Längsschlitzen in entgegengesetzte Richtung zur Lotsenkrechten der Mittenachse der Dichtungsinnenmanschette schräg gestellt sein. In einer Weiterbildung der Erfindung ist vorgesehen, dass die Dichtungsinnenmanschette an ihrem äußeren Umfang zumindest im Bereich des Zwischenabschnittes, also dort wo Längsschlitze der ersten und/oder zweiten Gruppe vorgesehen sind, mit einer Abdeckung, insbesondere eine Folie oder ein Blech bedeckt ist. Es kann sich hier beispielsweise um eine metallische Folie, insbesondere eine Edelstahlfolie oder ein Edelstahlblech, handeln, die beispielsweise eine Dicke von etwa 0,3 mm bis 0,7 mm aufweist. Diese Folie bzw. Blech wird um den Außenumfang der Dichtungsinnenmanschette zumindest im Bereich der Längsschlitze um die Dichtungsinnenmanschette gewickelt. Es ist jedoch auch möglich, die gesamte Dichtungsinnenmanschette außenseitig mit einer solchen Folie oder einem solchen Blech zu umwickeln. Sinn und Zweck einer solchen Abdeckung ist es, die Längsschlitze abzudecken. Die Dichtungsinnenmanschette mit einer solchen Abdeckung wird dann vorzugsweise außen mit einem geeigneten Dichtmaterial versehen. Dieses Dichtmaterial kann ein gummiartiger Schlauch sein, der außen über die Dichtungsinnenmanschette gezogen wird und am Außenumfang vorzugsweise eine oder mehrere umlaufende Dichtlippen aufweist. Die so vorbereitete Dichtungsinnenmanschette mit aufgezogenem gummiartigen Schlauch und Abdeckung kann dann von dem eingangs erwähnten Packer an die zu reparierende Stelle des Kanalrohres verbracht und dort platziert werden.

In einer Ausführungsform der Erfindung sind die Längsschlitze der zweiten Gruppe schmaler als die Längsschlitze der ersten Gruppe gestaltet. Es können dabei die Längsschlitze der zweiten Gruppe etwa 3 bis 7 mm breit und etwa 10 bis 15 cm lang sein, wobei die Längsschlitze dabei von Längsstegen begrenzt sind, die etwa 1 bis 5 mm breit sind.

Die Dichtungsinnenmanschette nach der Erfindung wird nachfolgend im Zusammenhang mit mehreren Figuren näher erläutert. Es zeigen:
Figur 1 eine nicht unter die Erfindung fallende Dichtungsinnenmanschette im aufgewickelten Zustand mit Blick von schräg vorne,
Figur 2 die Dichtungsinnenmanschette von Figur 1 in Seitenansicht,
Figur 3 einen vergrößerten Ausschnitt der in Figur 2 dargestellten Dichtungsinnenmanschette im Bereich der Längsschlitze,
Figur 4 einen ausschnittsweisen Blick in das Innere der Dichtungsinnenmanschette im gespannten Zustand in einem Rohr mit konstanten Durchmesser,
Figur 5 einen ausschnittsweisen Blick in ein Rohrinneres mit Durchmesseränderung mit einer gespannten Dichtungsinnenmanschette gemäß den Figuren 1 bis 4,
Figur 6 eine ähnliche Darstellung wie in Figur 1, wobei jedoch jetzt zusätzlich weitere Längsschlitze am Außenumfang der Dichtungsinnenmanschette angeordnet sind, um schräg zueinander stehende Rohrabschnitte abdichten zu können,
Figur 7 die Dichtungsinnenmanschette von Figur 6 in Seitenansicht,
Figur 8 ein weiteres Ausführungsbeispiel einer Dichtungsinnenmanschette mit verschiedenen Längsschlitzen in Seitenansicht, und
Figur 9 eine Detailansicht der in Figur 8 dargestellten Dichtungsinnenmanschette. In den nachfolgenden Figuren bezeichnen, sofern nicht anders angegeben, gleiche Bezugszeichen gleiche Teile mit gleicher Bedeutung.

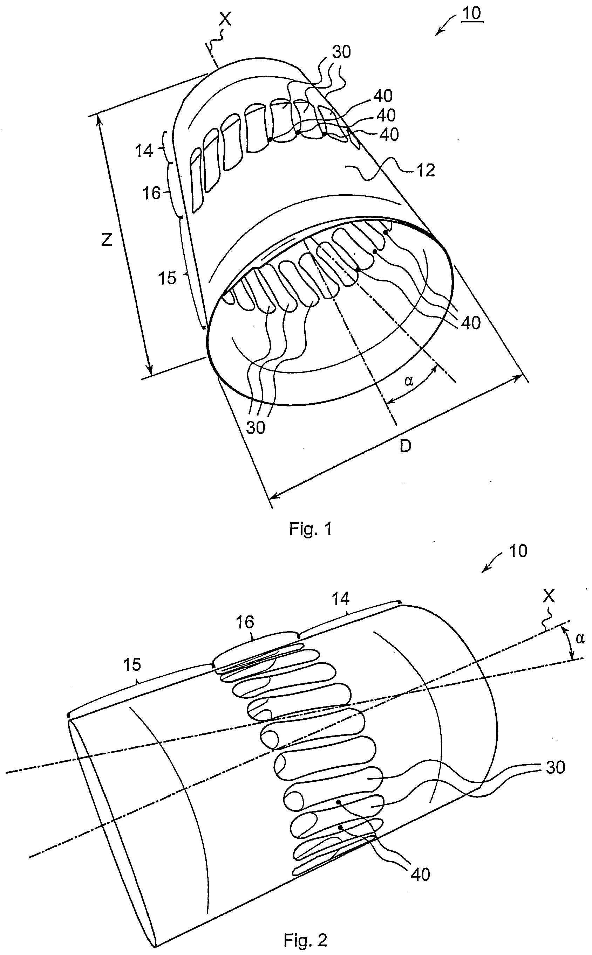

In Figur 1 ist eine Dichtungsinnenmanschette mit perspektivischer Ansicht von vorne dargestellt. Die Dichtungsinnenmanschette ist mit den Bezugszeichen 10 versehen und verfügt über ein aufgerolltes, metallisches Band 12, dessen endseitigen Bandteile sich überlappen. In diesem aufgerollten Zustand wird die Dichtungsinnenmanschette 10 von einer in Figur 1 nicht zu erkennenden, im Innenbereich liegenden Verriegelungseinrichtung gehalten. Die Verriegelungseinrichtung ist dabei so gestaltet, dass sie ein Aufweiten im Durchmesser der Dichtungsinnenmanschette 10 erlaubt, jedoch in entgegengesetzter Richtung sperrt. Geeignete Verriegelungsmechanismen und Verriegelungsvorrichtungen sind hinlänglich bekannt, beispielsweise aus den eingangs genannten DE 44 01 318 C2 und EP 0 805 932 B1.

Die Dichtungsinnenmanschette 10 ist im dargestellten Zustand ein zylindrischer Körper mit einer Mittenachse X. Die Dichtungsinnenmanschette 10 verfügt über zwei Endabschnitte 14, 15 zwischen denen ein Zwischenabschnitt 16 sitzt. Dabei sind die Endabschnitte 14, 15 massive Metallabschnitte, während der Zwischenabschnitt 16 eine Vielzahl von in Umfangsrichtung der Dichtungsinnenmanschette 10 verlaufende Längsschlitze 30 aufweist, die von Längsstegen 40 beanstandet sind.

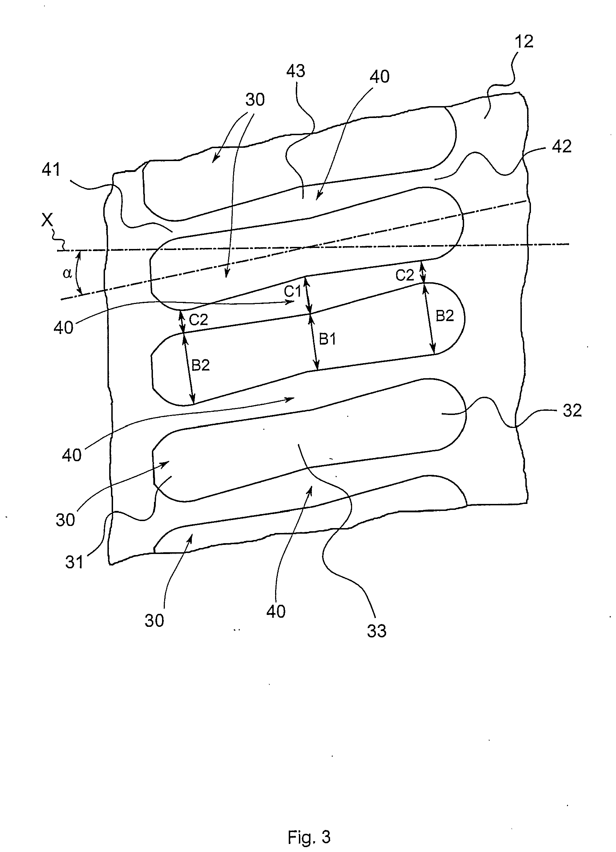

Die Längsschlitze 30 und Längsstege 40 der Dichtungsinnenmanschette 10 sind zur Mittenachse X mit einem Winkelversatz α versehen und damit schräg zur Mittenachse X platziert. Diese Winkelversatz α kann zwischen etwa 5 und 20 Grad liegen, vorzugsweise bei etwa mindestens annähernd 10 Grad. Die Längsschlitze 30 und Längsstege 40 werden im Zusammenhang mit Figur 3 noch näher erläutert werden. Insgesamt können beispielsweise 10 bis 120, vorzugsweise 25 bis 35 Längsschlitze 30 in die Dichtungsinnenmanschette 10 durch Stanzen oder Ausschneiden eingearbeitet sein.

Die Dichtungsinnenmanschette 10 weist eine Gesamtlänge Z auf von beispielsweise 40 cm bis 80 cm. Der erwähnte Mittenbereich 16 kann dabei 0,2 bis etwa 0,5 dieser Gesamtlänge Z betragen. Die beiden Endabschnitte 14, 15 sind vorzugsweise bezogen auf die Mittenachse X jeweils gleichlang gestaltet und weisen eine Länge von etwa 0,25 bis 0,4 von Z auf. Der Durchmesser D der Dichtungsinnenmanschette 10 kann beispielsweise im gespannten Zustand zwischen 20 und 80 cm liegen. Andere Größenverhältnisse sind allerdings ebenfalls möglich.

Figur 3 zeigt den Ausschnitt des metallischen Bandes 12 im Bereich der Längsschlitze 30 und Längsstege 40 in vergrößerter Ansicht. Deutlich ist wiederum der Winkelversatz α zur Mittenachse X erkennbar. Die Längsschlitze 30 sind löffelförmig gestaltet mit an ihren Längsenden jeweils abgerundeten Bereichen. An ihren Enden weisen die Längsschlitze 30 eine maximale Breite von B2 auf. In der Mitte der Längsschlitze 30 ist die Breite verringert und beträgt B1. B1 kann beispielsweise 2 cm sein, während B2 2,5 cm ist. Die Längsstege 40 sind entsprechend gestaltet und weisen demzufolge in der Mitte eine maximale Breite C1 und im an ihren Enden eine minimale Breite C2 auf. C1 kann beispielsweise 1 cm sein und C2 0,5 cm. Andere Größenverhältnisse sind ebenfalls möglich. In dem konkreten Beispiel von Figur 3 weisen die Schlitze eine Gesamtlänge von etwa 10 cm auf. Eine derartige Anordnung der Längsschlitze 30 und Längsstege 40 ist hinsichtlich der Verbindungsmöglichkeiten einerseits und der Stabilität der Dichtungsinnenmanschette 10 andererseits optimal.

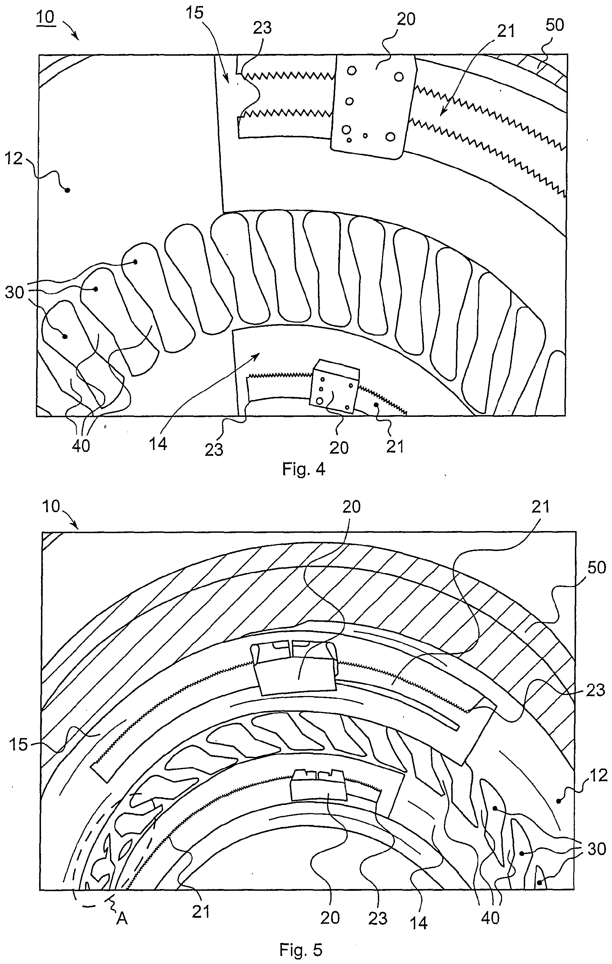

Dies wird anhand der Innenansichten der Dichtungsinnenmanschette von Figur 4 und Figur 5 deutlich.

Figur 4 zeigt den ausschnittsweisen Blick in das Innere einer Dichtungsinnenmanschette 10 im gespannten Zustand in ein Kanalrohr 50 mit konstanten Durchmesser und ohne Radialversatz. Es sind in Figur 4 deutlich zwei Verriegelungsvorrichtungen 20 erkennbar, welche jeweils auf einer Zahnstange 21 laufen. Beide Verriegelungseinrichtungen 20 befinden sich in etwa in einem gleichen Abstand zum Anschlag 23 der Zahnstange 21 und sind damit gleich gespannt. Die Längsschlitze 30 und Längsstege 40 sind allesamt zueinander parallel ausgerichtet, weil auf die Dichtungsinnenmanschette 10 von Figur 4 weder ein Radialversatz noch eine Durchmesserveränderung eines Kanalrohrs einwirkt.

In Figur 5 ist die in Figur 4 gezeigte Dichtungsinnenmanschette 10 in ein Kanalrohr 50 mit Durchmesserveränderung bzw. Radialversatz abdichtend eingespannt. Es ist deutlich zu erkennen, dass die den Betrachter abgewandte hintere Verriegelungseinrichtung 20 viel näher an dem Anschlag 23 der Verriegelungseinrichtung 20 sitzt als die dem Betrachter zugewandte vordere Verriegelungseinrichtung 20. Dies bedeutet, dass die Verriegelungseinrichtungen 20 die Endabschnitte 14, 15 unterschiedlich stark gespannt haben aufgrund des vorhandenen Radialversatzes bzw. vorhandenen Durchmesseränderungen des Kanalrohres 50. Dabei ist die Dichtungsinnenmanschette 10 im Zwischenabschnitt mit den Längsschlitzen 30 und Längsstegen 40 verformt, insbesondere verwunden, was besonders deutlich in Figur 5 in dem mit dem Bezugszeichen A markierten Bereich ersichtlich ist. Dort kreuzen sich nämlich die Längsschlitze 30 bzw. Längsstege 40 zwischen dem äußeren und inneren Bandteil des Bandes 12 der Dichtungsinnenmanschette 10.

Die in den bisher disktutierten Beispiele eingesetzten Längsschlitze 30 und Längsstege 40 sind bestens dafür geeignet, solche Abschnitte von Rohren abzudichten, die einen Radialversatz oder eine Durchmesseränderung haben. Die erwähnten Längsschlitze 30 und Längsstege 40 können einen solchen Radialversatz oder eine solche Durchmesserveränderung auf Grund der besonderen Schrägstellung der Längsschlitze 30 gut ausgleichen, wenn die Dichtungsinnenmanschette 10 innerhalb des zu sanierenden Rohrabschnittes aufgespannt wird. Diese bisher diskutieren Längsschlitze 30 bilden eine erste Gruppe. Beim Sanieren von Rohren treten aber auch Rohrabschnitte auf, die leicht zueinander schräggestellt sein können. Dies bedeutet, dass die aneinanderliegenden Rohrabschnitte schräg zueinander verlaufende Mittenachsen haben. Solche Schrägstellungen können mehrere Grad, beispielsweise zwischen größer 0° und 10 bis 20° liegen. Um auch solche schräg zueinander verlaufenden Rohrabschnitte im Bedarfsfall abdichten zu können, ist die erwähnte erste Gruppe von Längsschlitzen nicht geeignet.

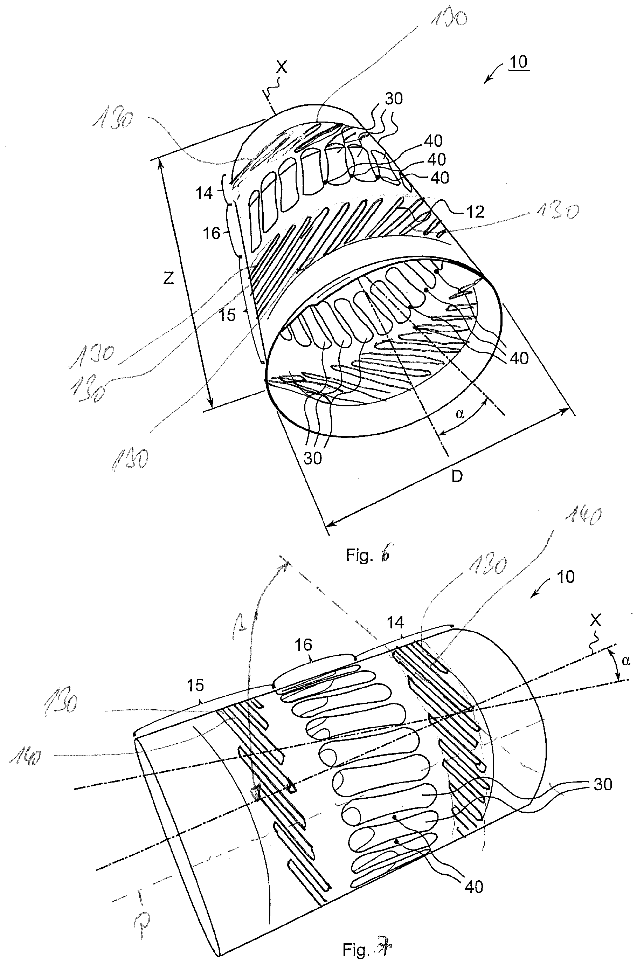

In den nachfolgenden Ausführungsbeispielen der Figuren 6 bis 9 werden deshalb Dichtungsinnenmanschetten vorgestellt, bei denen auch eine zweite Gruppe von Längsschlitzen vorhanden sind, die deutlich schräger zur Mittenachse X der Dichtungsinnenmanschette 10 platziert sind als die zuvor diskutierten Längsschlitze 30. Die im Folgenden diskutierten Längsschlitze werden im Folgenden als zweite Gruppe von Längsschlitzen bezeichnet und mit den Bezugszeichen 130 markiert. Diese Längsschlitze 130 der zweiten Gruppe sind von Längsstegen 140 beabstandet.

An dieser Stelle ist nochmals anzumerken, dass es je nach Anwendungsfall ausreichend ist, in der Dichtungsinnenmanschette 10 Längsschlitze 30 der ersten Gruppe oder Längsschlitze 130 der zweiten Gruppe anzuordnen. Um jedoch eine universal einsetzbare Dichtungsinnenmanschette 10 bereitzustellen, bietet es sich an, am Umfang der Dichtungsinnenmanschette 10 sowohl die Längsschlitze 30 der ersten Gruppe als auch die Längsschlitze 130 der zweiten Gruppe vorzusehen.

In den Figuren 6 bis 9 sind Dichtungsinnenmanschetten 10 dargestellt, bei denen sowohl die Längsschlitze 30 der ersten Gruppe als auch Längsschlitze 130 der zweiten Gruppe eingearbeitet sind. So zeigt Figur 6 jetzt einen Dichtungsinnenmanschette 10, wie sie bereits im Zusammenhang mit Figur 1 vorgestellt wurde, wobei jedoch jetzt eine zweite Gruppe von Längsschlitzen 130 vorgesehen ist, welche deutlich schräger als die Längsschlitze 30 der ersten Gruppe am Umfang der Dichtungsinnenmanschette 10 verteilt sind. Diese Längsschlitze 130 der zweiten Gruppe sind auf beiden Seiten der Längsschlitze 130 der ersten Gruppe platziert. Diese Längsschlitze 30 der zweiten Gruppe sind allesamt zueinander parallel ausgerichtet und bezogen auf die Mittenachse X in einem Winkel β platziert, welcher größer 45° und kleiner 90° ist. Höchstvorzugsweise liegt der Winkel β zwischen 55° und 85°, wobei sich bei einem konkreten Ausführungsbeispiel es sich als günstig erwiesen hat, diesen Winkel bei etwa 75° einzustellen. In den Figuren 6 und 7 beträgt der Winkel β 75°.

Wie in den Figuren 6 und 7 dargestellt, sind die Längsschlitze 130 der zweiten Gruppe deutlich schmaler als die Längsschlitze 30 der ersten Gruppe gestaltet. Die Längsschlitze 130 der zweiten Gruppe sind von Längsstegen 140 getrennt, die ebenfalls verhältnismäßig schmal sind. So können die Längsschlitze 130 der zweiten Gruppe etwa 3 bis 7 mm breit und etwa 10 bis 15 cm lang sein. Die Längsstege 140 sind etwa 1 bis 5 mm breit, sofern eine Dichtungsinnenmanschette 10 angenommen wird, die beispielsweise einen Innendurchmesser von 25 cm bis 40 cm Durchmesser hat.

Wie besonders gut die Darstellung von Figur 7 erkennen lässt, ist die Länge der Längsschlitze 130 der zweiten Gruppe so gewählt, dass eine gedachte Parallele P zur Mittenachse X auf der Umfangsfläche der Dichtungsinnenmanschette 10 mehrere Längsschlitze 130 schneidet. Im Ausführungsbeispiel von Figur 7 schneidet eine solche Parallel P z. B. drei Längsschlitze 130.

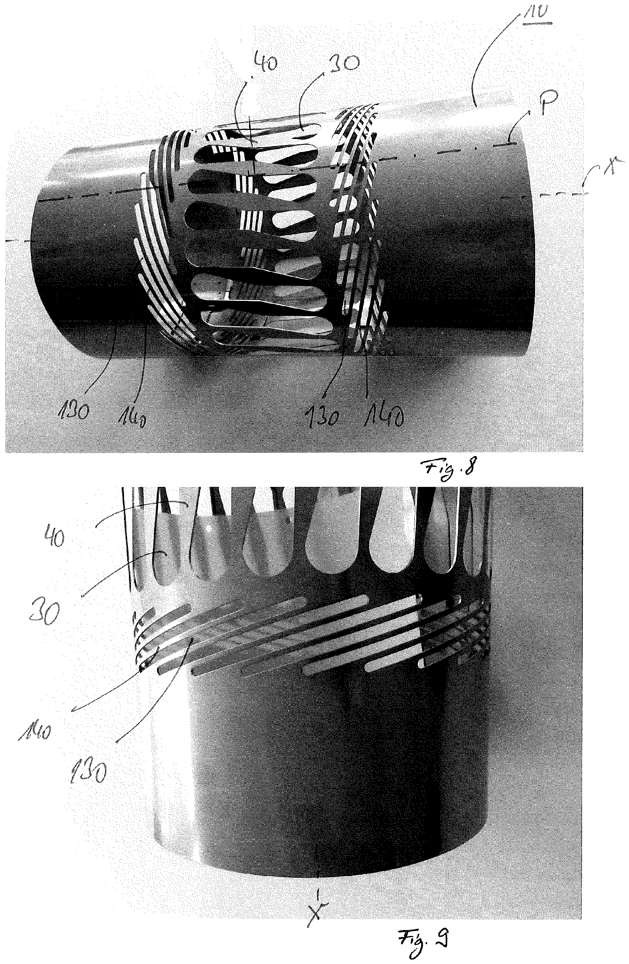

In den Figuren 8 und 9 ist ein anderes Ausführungsbeispiel einer Dichtungsinnenmanschette 10 dargestellt. Dieses Ausführungsbeispiel ähnelt sehr der Dichtungsinnenmanschette der Figuren 6 und 7. Allerdings sind die Längsschlitze 130 der zweiten Gruppe in eine erste Untergruppe unterteilt, die in Figur 8 links von den Längsschlitzen 30 platziert sind und in eine zweite Untergruppe, die in Figur 8 rechts von den Längsschlitzen 30 platziert sind. Alle links von den Längsschlitzen 40 platzierten Längsschlitze 130 dieser zweiten Teilgruppe sind mit einem Winkelversatz zur Mittelachse X nach schräg links angeordnet und die Längsschlitze 130, welche rechts von den Längsschlitzen 30 angeordnet sind mit einem Winkelversatz zur Mittelachse X, der nach schräg rechts zeigt. Zu einer gedachten Ebene, die exakt in der Mitte der Dichtungsinnenmanschette 10 steht und zu der die Mittenachse X orthogonal steht, ergibt sich so eine symmetrische Anordnung der Längsschlitze 140 beider Untergruppen. Betrachtet man wiederum eine Parallel P auf der Umfangsfläche der Dichtungsinnenmanschette 10, welche parallel zur Mittenachse X verläuft, so ist zu erkennen, dass diese Parallele P sowohl vier Längsschlitze 130 links von den Längsschlitzen 30 schneidet und auch vier Längsschlitze 130 rechts von den Längsschlitzen 30 der ersten Gruppe.

Figur 9 zeigt eine vergrößerte ausschnittsweise Darstellung der Längsschlitze 130 und der zugehörenden Längsstege 140 der zweiten Gruppe von Figur 8.

### Bezugszeichenliste

- 10: Dichtungsinnenmanschette
- 12: Band
- 14: Endabschnitt
- 15: Endabschnitt
- 16: Zwischenabschnitt

- 20: Verriegelungseinrichtung
- 21: Zahnstange
- 23: Anschlag

- 30: Längsschlitz der ersten Gruppe
- 31: Endbereich
- 32: Endbereich
- 33: Mittenbereich

- 40: Längssteg der ersten Gruppe
- 41: Endbereich
- 42: Endbereich
- 43: Mittenbereich

- 50: Kanalrohr

- 130: Längsschlitz der zweiten Gruppe
- 140: Längssteg der zweiten Gruppe

- A: Bereich
- B1: minimale Breite von 30
- B2: maximale Breite von 30
- C1: maximale Breite von 40
- C2: minimale Breite von 40
- D: Durchmesser
- X: Mittenachse
- α: Winkelversatz der Längsschlitze der ersten Gruppe
- β: Winkelversatz der Längsschlitze der zweiten Gruppe
- Z: Gesamtlänge
- P: Parallele

## Patentansprüche

1. Dichtungsinnenmanschette (10) zum Einsetzen in Rohre, um dortige Leckstellen abzudichten, mit einem ringförmig zusammengebogenen und aufweitbarem Band (12), vorzugsweise aus Stahlblech, dessen Bandteile sich in Umfangsrichtung mindestens teilweise überlappen, und mit einer eine Durchmesservergrößerung der Dichtungsinnenmanschette (10) zulassende, jedoch in entgegengesetzte Richtung sperrenden Verriegelungseinrichtung (20), wobei die Dichtungsinnenmaschette (10) zwei Endabschnitte (14), (15) und einen, diese miteinander zu einem zusammenhängenden Bauteil verbindenden Zwischenabschnitt (16) aufweist und wobei in dem Zwischenabschnitt (16) eine Vielzahl von in Umfangsrichtung zueinander beabstandeten und von Längsstegen (40) voneinander getrennten Längsschlitzen (30) angeordnet sind, wobei die Längsschlitze (30, 130) und Längsstege (40, 140) mit einem vorgegebenen Winkelversatz schräg zu einer Mittenachse (X) der Dichtungsinnenmanschette (10) auf dem Umfang der Dichtungsinnenmanschette (10) angeordnet sind, wobei eine erste Gruppe von Längsschlitzen (30) und Längsstegen (40) vorgesehen ist mit einem Winkelversatz in einem Bereich von etwa 5 Grad bis 20 Grad und dass zumindest eine zweite Gruppe von Längsschlitzen (130) und Längsstegen (140) vorgesehen ist mit einem Winkelversatz zur Mittenachse (X) in einem Bereich von etwa größer 45° und kleiner 90°.

2. Dichtungsinnenmanschette (10) nach Anspruch 1,
**dadurch gekennzeichnet, dass** die erste Gruppe von Längsschlitzen (30) und Längsstegen (40) einen Winkelversatz von etwa 8 Grad bis 12 Grad, vorzugsweise etwa 10 Grad, aufweist, und/oder dass die zweite Gruppe von Längsschlitzen (130) und Längsstegen (140) einen Winkelversatz von etwa 75° aufweist.

3. Dichtungsinnenmanschette (10) nach Anspruch 1 oder 2,
**dadurch gekennzeichnet, dass** sämtliche Längsschlitze (30) und Längsstege (40) der ersten Gruppe zueinander parallel angeordnet sind.

4. Dichtungsinnenmanschette (10) nach einem der Ansprüche 1 bis 3,
**dadurch gekennzeichnet, dass** die Längsschlitze (30) der ersten Gruppe mindestens annähernd ein bis fünf Mal breiter als die Längsstege (40) in Umfangsrichtung der Dichtungsinnenmanschette (10) gesehen sind.

5. Dichtungsinnenmanschette (10) nach einem der Ansprüche 1 bis 4,
**dadurch gekennzeichnet, dass** die Längsschlitze (30) der ersten Gruppe in ihren Endbereichen (41), (42) abgerundet oder eckig sind.

6. Dichtungsinnenmanschette (10) nach einem der Ansprüche 1 bis 5,
**dadurch gekennzeichnet, dass** die Längsstege (40) in Umfangsrichtung der Dichtungsinnenmanschette (10) gesehen in einem Mittenbereich (43) bauchartig verdickt sind.

7. Dichtungsinnenmanschette (10) nach einem der Ansprüche 1 bis 6,
**dadurch gekennzeichnet, dass** der Zwischenabschnitt (16) der Dichtungsinnenmanschette (10) etwa 0,2 bis 0,5 der Gesamtlänge Z in Richtung der Mittenachse (X) gesehen der Dichtungsinnenmanschette (10) beträgt.

8. Dichtungsinnenmanschette (10) nach einem der Ansprüche 1 bis 7,
**dadurch gekennzeichnet, dass** die Dichtungsinnenmanschette (10) in der ersten Gruppe etwa 10 bis 120 Längsschlitze (30) aufweist.

9. Dichtungsinnenmanschette (10) nach einem der Ansprüche 1 bis 8,
**dadurch gekennzeichnet, dass** zumindest der mit den Längsschlitzen (30, 10, 130) versehene Zwischenabschnitt (16) der Dichtungsinnenmanschette (10) mit einer Abdeckung, insbesondere einer metallischen Folie, abgedeckt ist.

10. Dichtungsinnenmanschette (10) nach einem der Ansprüche 1 bis 9,
**dadurch gekennzeichnet, dass** die Längsschlitze (30) der ersten Gruppe zwischen zwei zweiten Gruppen von Längsschlitzen (130) angeordnet sind.

11. Dichtungsinnenmanschette (10) nach einem der Ansprüche 1 bis 10,
**dadurch gekennzeichnet, dass** die Längsschlitze (130) der zweiten Gruppe schmaler sind als die Längsschlitze (30) der ersten Gruppe.

12. Dichtungsinnenmanschette (10) nach einem der Ansprüche 1 bis 11,
**dadurch gekennzeichnet, dass** die Längsschlitze (130) der zweiten Gruppe etwa 3 bis 7 mm breit und etwa 10 bis 15 cm lang sind und von Längsstegen (140) abgegrenzt sind, welche etwa 1 bis 5 mm breit sind.

13. Dichtungsinnenmanschette (10) nach Anspruch 10,
**dadurch gekennzeichnet, dass** die zwei weiteren Gruppen von Längsschlitzen (130) zu einer Lotsenkrechten der Mittenachse (X) zueinander symmetrisch mit dem vorgegebenen Winkelversatz schräg angeordnet sind.

14. Dichtungsinnenmanschette (10) nach einem der Ansprüche 1 bis 13,
**dadurch gekennzeichnet, dass** der Bereich der zweiten Gruppe von Längsschlitzen (130) kleiner ist als der Bereich der ersten Gruppe von Längsschlitzen (130), bezogen auf die Länge der Dichtungsinnenmanschette in Richtung der Mittenachse (X).

## Claims

1. Sealing inner sleeve (10) for insertion in pipes in order to seal leakage points therein, with an expandable strip (12) bent into a ring and preferably made of sheet steel, the strip parts of which overlap at least partially in the circumferential direction, and with a locking device (20) which allows an increase in diameter of the sealing inner sleeve (10) but blocks it in the opposite direction, wherein the sealing inner sleeve (10) has two end portions (14, 15) and an intermediate portion (16) connecting these together into a cohesive component, and wherein a plurality of longitudinal slots (30) are arranged in the intermediate portion (16) spaced apart from each other in the circumferential direction and separated from each other by longitudinal webs (40), wherein the longitudinal slots (30, 130) and longitudinal webs (40, 140) are arranged on the circumference of the sealing inner sleeve (10) with a predefined angular offset obliquely to a centre axis (X) of the sealing inner sleeve (10),
wherein a first group of longitudinal slots (30) and longitudinal webs (40) is provided with an angular offset in a range from around 5° to 20°, and at least one second group of longitudinal slots (130) and longitudinal webs (140) is provided with an angular offset to the central axis (X) in a range from around greater than 45° to less than 90°.

2. Sealing inner sleeve (10) according to claim 1, **characterised in that** the first group of longitudinal slots (30) and longitudinal webs (40) has an angular offset from around 8° to 12°, preferably around 10°, and/or the second group of longitudinal slots (130) and longitudinal webs (140) has an angular offset of around 75°.

3. Sealing inner sleeve (10) according to claim 1 or claim 2, **characterised in that** all longitudinal slots (30) and longitudinal webs (40) of the first group are arranged parallel to each other.

4. Sealing inner sleeve (10) according to any of claims 1 to 3, **characterised in that** the longitudinal slots (30) of the first group are at least approximately 1 to 5 times wider than the longitudinal webs (40) viewed in the circumferential direction of the sealing inner sleeve (10).

5. Sealing inner sleeve (10) according to any of claims 1 to 4, **characterised in that** the longitudinal slots (30) of the first group are rounded or angular in the end regions (41, 42).

6. Sealing inner sleeve (10) according to any of claims 1 to 5, **characterised in that** the longitudinal webs (40) are thickened with a bulge in a middle region (43) viewed in the circumferential direction of the sealing inner sleeve (10).

7. Sealing inner sleeve (10) according to any of claims 1 to 6, **characterised in that** the intermediate portion (16) of the sealing inner sleeve (10) is approximately 0.2 to 0.5 times the total length Z of the sealing inner sleeve (10) viewed in the direction of the central axis (X).

8. Sealing inner sleeve (10) according to any of claims 1 to 7, **characterised in that** the sealing inner sleeve (10) has around 10 to 120 longitudinal slots (30) in the first group.

9. Sealing inner sleeve (10) according to any of claims 1 to 8, **characterised in that** at least the intermediate portion (16) of the sealing inner sleeve (10) provided with the longitudinal slots (30, 130) is covered with a cover, in particular a metal film.

10. Sealing inner sleeve (10) according to any of claims 1 to 9, **characterised in that** the longitudinal slots (30) of the first group are arranged between two second groups of longitudinal slots (130).

11. Sealing inner sleeve (10) according to any of claims 1 to 10, **characterised in that** the longitudinal slots (130) of the second group are narrower than the longitudinal slots (30) of the first group.

12. Sealing inner sleeve (10) according to any of claims 1 to 11, **characterised in that** the longitudinal slots (130) of the second group are around 3 to 7 mm wide and around 10 to 15 cm long, and are delimited by longitudinal webs (140) which are approximately 1 to 5 mm wide.

13. Sealing inner sleeve (10) according to claim 10, **characterised in that** the second wider group of longitudinal slots (130) are arranged obliquely to a perpendicular to the central axis (X) with the predefined angular offset and symmetrically to each other.

14. Sealing inner sleeve (10) according to any of claims 1 to 13, **characterised in that** the region of the second group of longitudinal slots (130) is smaller than the region of the first group of longitudinal slots (30) relative to the length of the sealing inner sleeve in the direction of the centre axis (X).

## Revendications

1. Manchette d'étanchéité interne (10) destinée à être insérée dans des tubes pour y assurer l'étanchéité de points de fuite, comprenant une bande (12) cintrée sur elle-même en forme d'anneau et pouvant être élargie, en particulier en tôle d'acier, dont les parties se chevauchent au moins partiellement dans la direction périphérique, et comportant un dispositif de verrouillage (20) permettant une augmentation du diamètre de la manchette d'étanchéité interne (10), mais la bloquant en direction opposée, la manchette d'étanchéité interne (10) comportant deux segments d'extrémité (14), (15) ainsi qu'un segment intermédiaire (16) reliant ces segments pour obtenir un élément continu, et, le segment intermédiaire (16) est équipé d'un ensemble de fentes longitudinales (30) situées à distance les unes des autres en direction périphérique et séparées par des barrettes longitudinales (40), et
les fentes longitudinales (30, 130) et les barrettes longitudinales (40, 140) étant positionnées obliquement avec un décalage angulaire prédéfini par rapport à l'axe médian (X) de la manchette d'étanchéité interne (10) sur la périphérie de celle-ci, un premier groupe de fentes longitudinales (30) et de barrettes longitudinales (40) présentant un décalage angulaire situé dans la plage d'environ 5° à environ 20°, et un second groupe de fentes longitudinales (130) et de barrettes longitudinales (140) présentant un décalage angulaire situé dans la plage essentiellement supérieure à 45° et essentiellement inférieure à 90° par rapport à l'axe médian (X).

2. Manchette d'étanchéité interne (10) conforme à la revendication 1, **caractérisée en ce que**
le premier groupe de fentes longitudinales (30) et de barrettes longitudinales (40) présente un décalage angulaire d'environ 8° à 12°, de préférence d'environ 10°, et/ou le second groupe de fentes longitudinales (130) et de barrettes longitudinales (140) présente un décalage angulaire d'environ 75°.

3. Manchette d'étanchéité interne (10) conforme à la revendication 1 ou 2,
**caractérisée en ce que**
toutes les fentes longitudinales (30) et toutes les barrettes longitudinales (40) du premier groupe sont parallèles.

4. Manchette d'étanchéité interne (10) conforme à l'une des revendications 1 à 3,
**caractérisée en ce que**
les fentes longitudinales (30) du premier groupe sont au moins approximativement une à cinq fois plus larges que les barrettes longitudinales (40) dans la direction périphérique de la manchette d'étanchéité interne (10).

5. Manchette d'étanchéité interne (10) conforme à l'une des revendications 1 à 4,
**caractérisée en ce que**
les fentes longitudinales (30) du premier groupe sont arrondies ou angulaires au niveau de leurs zones d'extrémités (41, 42).

6. Manchette d'étanchéité interne (10) conforme à l'une des revendications 1 à 5,
**caractérisée en ce que**
les barrettes d'étanchéité (40) sont épaissies en forme de ventre dans leur zone médiane (43) considérée dans la direction périphérique de la manchette d'étanchéité interne (10).

7. Manchette d'étanchéité interne (10) conforme à l'une des revendications 1 à 6,
**caractérisée en ce que**
le segment intermédiaire (16) de la manchette d'étanchéité interne (10) occupe environ 0,2 à 0,5 fois la longueur totale Z de la manchette d'étanchéité interne (10) considérée en direction de l'axe médian (X).

8. Manchette d'étanchéité interne (10) conforme à l'une des revendications 1 à 7,
**caractérisée en ce que**
la manchette d'étanchéité interne (10) comporte environ 10 à 120 fentes longitudinales (30) dans le premier groupe.

9. Manchette d'étanchéité interne (10) conforme à l'une des revendications 1 à 8,
**caractérisée en ce qu'**
au moins le segment intermédiaire (16) de la manchette d'étanchéité interne (10) équipé des fentes longitudinales (30, 130) est revêtu d'un revêtement, en particulier d'un film métallique.

10. Manchette d'étanchéité interne (10) conforme à l'une des revendications 1 à 9,
**caractérisée en ce que**
les fentes longitudinales (30) du premier groupe sont situées entre deux seconds groupes de fentes longitudinales (130).

11. Manchette d'étanchéité interne (10) conforme à l'une des revendications 1 à 10,
**caractérisée en ce que**
les fentes longitudinales (130) du second groupe sont plus étroites que les fentes d'étanchéité (30) du premier groupe.

12. Manchette d'étanchéité interne (10) conforme à l'une des revendications 1 à 11,
**caractérisée en ce que**
les fentes longitudinales (130) du second groupe ont une largeur d'environ 3 à 7 mm et une largeur d'environ 10 à 15 cm, et sont séparées par des barrettes longitudinales (140) qui ont une largeur d'environ 1 à 5 mm.

13. Manchette d'étanchéité interne (10) conforme à la revendication 10,
**caractérisée en ce que**
les deux autres groupes de fentes longitudinales (130) sont disposés obliquement avec le décalage angulaire prédéfini symétriquement par rapport à une perpendiculaire à l'axe médian (X).

14. Manchette d'étanchéité interne (10) conforme à l'une des revendications 1 à 13,
**caractérisée en ce que**
la zone du second groupe de fentes longitudinales (130) est plus petite que la zone du premier groupe de fentes longitudinales (30), par rapport à la longueur de la manchette d'étanchéité interne en direction de l'axe médian (X).
